(19) Europäisches Patentamt
European Patent Office
Office européen des brevets

(11) Veröffentlichungsnummer: **0 061 997**
**A1**

(12) # EUROPÄISCHE PATENTANMELDUNG

(21) Anmeldenummer: 82810121.2

(22) Anmeldetag: 17.03.82

(51) Int. Cl.[3]: C 09 B 45/20
D 06 P 3/32, D 06 P 3/30

(30) Priorität: 23.03.81 CH 1950/81

(43) Veröffentlichungstag der Anmeldung:
06.10.82 Patentblatt 82/40

(84) Benannte Vertragsstaaten:
CH DE FR GB IT LI

(71) Anmelder: CIBA-GEIGY AG
Patentabteilung Postfach
CH-4002 Basel(CH)

(72) Erfinder: Püntener, Alois, Dr.
Pulverweg 13
CH-4310 Rheinfelden(CH)

(54) **Verwendung von 1:2-Kobaltkomplexfarbstoffen zum Färben von Leder oder Pelzen.**

(57) Die Farbstoffe der im Patentanspruch 1 angegebenen Formel I eignen sich zum Färben von Pelzen und insbesondere von Leder.

Vorzugsweise werden sie im Gemisch mit einem blauen und einem roten Farbstoff für das Trichromieverfahren von Leder verwendet.

EP 0 061 997 A1

Croydon Printing Company Ltd.

CIBA-GEIGY AG  1-13338/+

Basel (Schweiz)

# Verwendung von 1:2-Kobaltkomplexfarbstoffen zum Färben von Leder oder Pelzen

Die Erfindung betrifft die Verwendung von Farbstoffen der Formel I

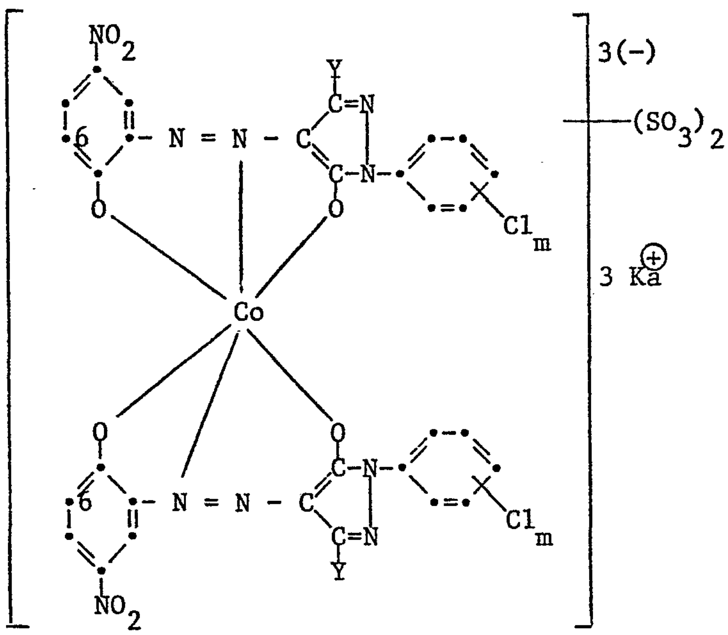

(I),

worin $Ka^{\oplus}$ ein Kation, m eine ganze Zahl von 0-2 und Y Methyl, $-CONH_2$ oder -CO-NH-R bedeuten, wobei R eine Alkylgruppe mit 1-4 C-Atomen darstellt und wobei mindestens eine Sulfogruppe in der Diazokomponente angeordnet ist, zum Färben von Leder oder Pelzen.

$Ka^{\oplus}$ stellt ein Kation, beispielsweise ein Alkalikation, wie Lithium, oder vorzugsweise Natrium oder Kalium, dar. Ferner kann $Ka^{\oplus}$ ein Ammoniumkation oder das Ammoniumsalz eines organischen Amins sein.

Vorzugsweise ist mindestens eine Sulfogruppe in 6-Stellung der Diazokomponente angeordnet und vor allem bevorzugt ist die Verwendung

solcher Farbstoffe der Formel I, worin jeder Monoazofarbstoff eine Sulfogruppe trägt, wovon mindestens eine in der Diazokomponente angeordnet ist. Von diesen Farbstoffen werden diejenigen bevorzugt zum Färben von Leder oder Pelzen verwendet, bei denen die beiden Sulfogruppen in 6-Stellung der beiden Diazokomponenten angeordnet sind.

m bedeutet vorzugsweise 1 und insbesondere 0.

Die Alkylgruppe R kann geradkettig oder verzweigt sein. Es handelt sich um Methyl, Ethyl, n-Propyl, iso-Propyl, n-Butyl, iso-Butyl oder tert.-Butyl. Vorzugsweise ist R Methyl.

In bevorzugten Farbstoffen ist Y Methyl und m gleich 0.

Der bevorzugte Gegenstand der vorliegenden Erfindung ist die Verwendung des Farbstoffes der Formel I, worin die beiden Sulfogruppen in 6-Stellung der beiden Diazokomponenten angeordnet sind, m gleich 0 und Y Methyl ist, zum Färben von Leder und Pelzen.

Geeignete Pyrazolone für die Farbstoffe der oben angegebenen Formel I sind z.B. 1-Phenyl-3-methylpyrazol-5-on, 1-(2'-, 3'- oder 4'-Chlorphenyl)-3-methylpyrazol-5-on, 1-(2',5'- oder 2',3'- oder 3',4'-Dichlorphenyl)-3-methylpyrazol-5-on, 1-(2'-, 3'- oder 4'-Sulfophenyl)-3-methylpyrazol-5-on, 1-(2'-Chlor-5'-sulfophenyl)-3-methylpyrazol-5-on, 1-(2' , 5'-Dichlor-4'-sulfophenyl)-3-methylpyrazol-5-on oder 1-Phenyl-5-pyrazolon-3-carbonsäureamid. Besonders bevorzugt unter diesen ist 1-Phenyl-3-methylpyrazol-5-on.

Die 1:2-Kobaltkomplexe werden auf die übliche Weise hergestellt, z.B. indem man die metallfreien Azofarbstoffe im Verhältnis 1:2 mit einem kobaltabgebenden Mittel umsetzt. Zur Einführung des Metalls verwendet man im allgemeinen Kobalt(II)salze wie z.B. Kobaltsulfat oder -chlorid - mit oder ohne Zusatz von Oxidationsmittelm wie z.B. Sauerstoff,

Wasserstoffperoxid oder Nitrobenzolsulfonsäure - oder auch den Kobalt-(III)-amin-Komplex.

Die oben erwähnten Salze können auch in Gegenwart von Komplexbildnern, wie z.B. Weinsäure, Salicylsäure oder Milchsäure, verwendet werden. Die kobaltabgebenden Mittel werden in stöchiometrischer Menge oder im Ueberschuss eingesetzt. Es können Gemische oder einheitliche Monoazofarbstoffe metallisiert werden. Im ersten Fall erhält man ein Gemisch von symmetrischen und asymmetrischen Metallkomplexen.

Die 1:2-Kobaltkomplexe werden zum Färben von Pelzen oder vorzugsweise von Leder verwendet, wobei alle Ledersorten geeignet sind, z.B. Chromleder, nachgegerbtes Leder oder Velourleder von Ziege, Rind oder Schwein.

Man erhält gelbbraune Färbungen sehr guter Echtheiten, insbesondere Licht- und Nassechtheiten.

Die bevorzugte Verwendung der Farbstoffe liegt im Färben von Leder mit Farbstoffmischungen, insbesondere im Gemisch mit einem blauen und einem roten 1:2-Metallkomplex-Farbstoff, womit erstmals das Trichromiefärben von Leder ermöglicht wird. Unter roten Farbstoffen sind in diesem Zusammenhang alle orangefarbenen bis rotbraunen Farbstoffe zu verstehen und die blauen, grauen oder violetten Farbstoffe werden als blaue Farbstoffe bezeichnet.

Vorzugsweise verwendet man eine Farbstoffmischung, enthaltend

a) einen gelbbraunen 1:2-Kobaltkomplex der oben angegebenen Formel I,

b) einen blauen oder violetten 1:2-Chrom- oder Kobaltkomplex des Farbstoffes der Formel II

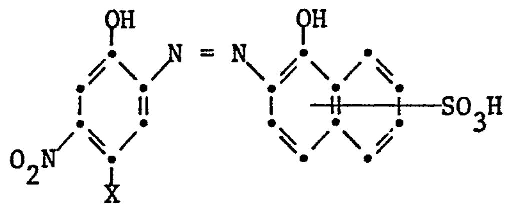 (II),

worin X Wasserstoff, Chlor, Methyl oder Methoxy bedeutet,
sowie

c) einen roten, rotbraunen oder gelbroten 1:2-Chrom- oder Kobaltkomplex des Farbstoffes der Formel III

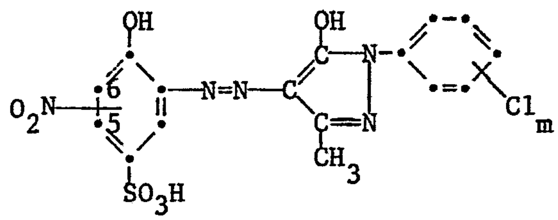 (III),

worin m eine ganze Zahl von 0-2 bedeutet und die Nitrogruppe in 5- oder 6-Stellung angeordnet ist.

Die nachfolgenden Beispiele dienen der Erläuterung der Erfindung, ohne sie darauf zu beschränken. Teile bedeuten Gewichtsteile und Prozente Gewichtsprozente. Die Temperaturen sind in Grad Celsius angegeben.

Beispiel 1: 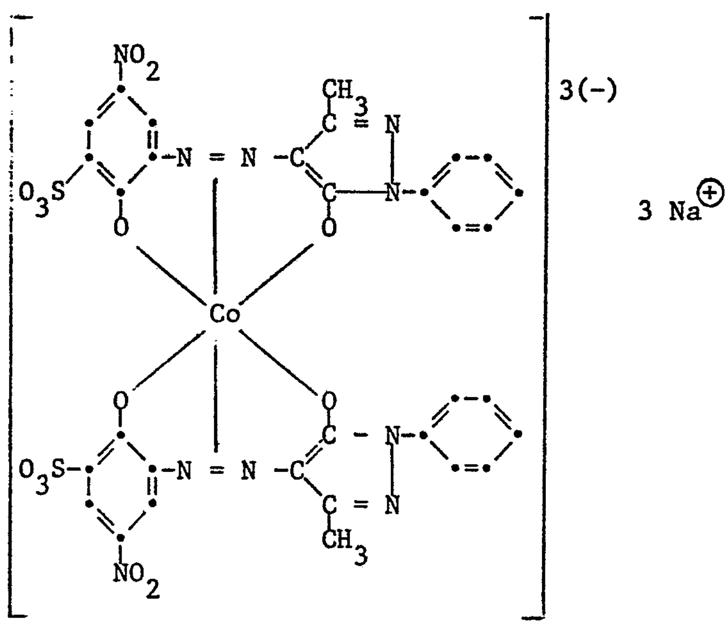

42 Teile des Monoazofarbstoffes, der erhalten wurde durch Kuppeln von diazotierter 4-Nitro-2-amino-1-hydroxybenzol-6-sulfonsäure auf 1-Phenyl-3-methylpyrazol-5-on, werden mit 4 Teilen Natriumhydroxid in 1000 Teilen 80° warmem Wasser gelöst, mit 60 Teilen einer 1 molaren Kobaltsulfatlösung versetzt und mit 2 molarer Natronlauge bei pH 8-9 gehalten. Die Reaktionslösung wird solange bei 80-90° gerührt, bis die Metallisierung beendet ist, wobei die Zugabe von 10 Teilen 4%iger Wasserstoffperoxidlösung die Metallisierung beschleunigt. Nachdem das Wasser am Rotationsverdampfer abgezogen wird, erhält man ein dunkles Pulver, welches Leder in einem gelbbraunen Farbton mit vorzüglichen Echtheiten färbt.

Beispiel 2: Arbeitet man wie im Beispiel 1, dampft jedoch die Reaktionslösung nicht am Rotationsverdampfer ein, sondern fällt den Farbstoff durch Zugabe von Kaliumchlorid zu der wässrigen Lösung aus, so erhält man den analogen Farbstoff wie im Beispiel 1, wobei das Natriumkation grösstenteils durch das Kaliumkation ersetzt ist. Der nach dem Trocknen erhaltene Farbstoff färbt Leder im gleichen Farbton und mit gleichwertigen Echtheiten. Will man einen Farbstoff herstellen, der als Kation nur Kalium enthält, so setzt man den Monoazofarbstoff bereits als Kaliumsalz ein und verwendet zur pH-Stabilisierung Kaliumhydroxid.

Nur partielle Verdrängung des Natriums durch Kalium ist durch Ausfällen des Farbstoffes mittels anorganischer Natrium-Kaliumsalzmischungen realisierbar.

Beispiele 3-6: Arbeitet man wie im Beispiel 1 beschrieben, verwendet jedoch die in der Tabelle I verzeichneten Monoazofarbstoffe, so erhält man 1:2-Metallkomplexe, die Leder mit gleichwertigen Echtheiten und ähnlicher, gelbbrauner Nuance färben.

Tabelle I

| Beispiel | Monoazofarbstoff |
|---|---|
| 3 | 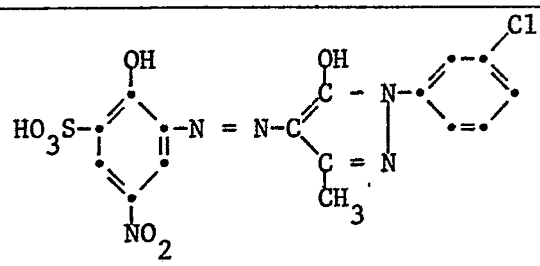 |
| 4 | 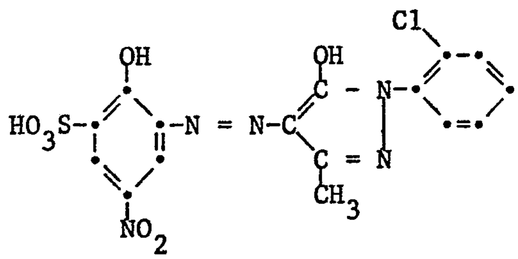 |
| 5 | 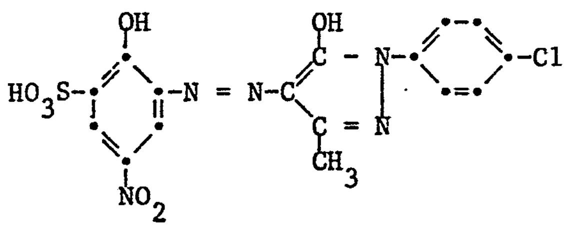 |
| | 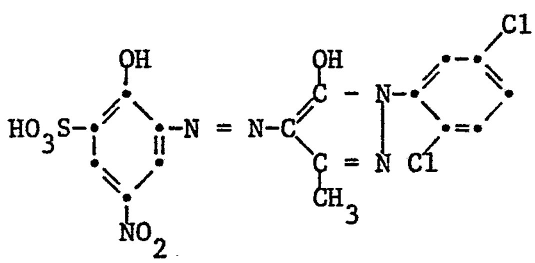 |

Die entsprechenden Farbstoffe mit Kalium als Kation erhält man nach Beispiel 2.

Beispiel 7: Werden 21 Teile des Monoazofarbstoffes, der erhalten wurde durch Kuppeln von diazotierter 4-Nitro-2-amino-1-hydroxybenzol-6-sulfonsäure auf 1-Phenyl-3-methylpyrazol-5-on, und 22,5 Teile des Monoazofarbstoffes, der analog durch Kuppeln von diazotierter 4-Nitro-2-amino-1-hydroxybenzol-6-sulfonsäure auf 1-(2-Chlorphenyl)-3-methylpyrazol-5-on erhalten wurde, in 1000 Teilen 80° warmem Wasser gelöst und wie in Beispiel 1 metallisiert und isoliert, so erhält man ein dunkles Pulver, welches Leder ebenfalls in einem gelbbraunen Farbton mit vorzüglichen Echtheiten färbt und folgendes Gemisch aus symmetrischen und asymmetrischen Metallkomplexen darstellt:

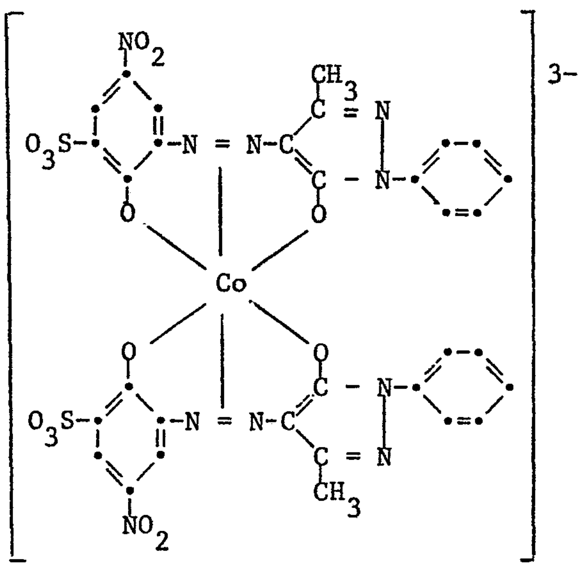

3 $Na^+$

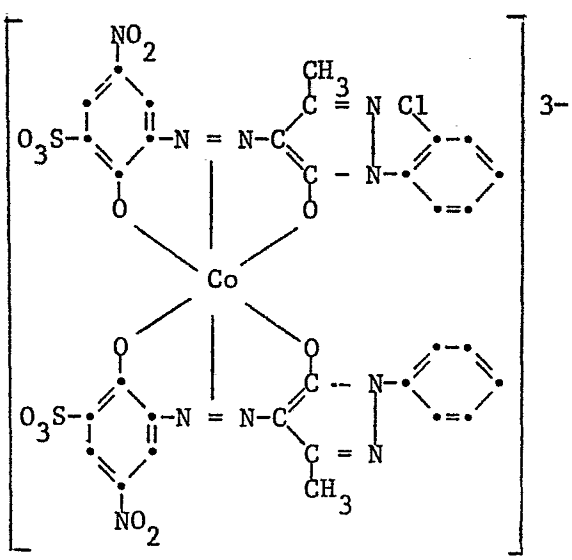

3 $Na^+$

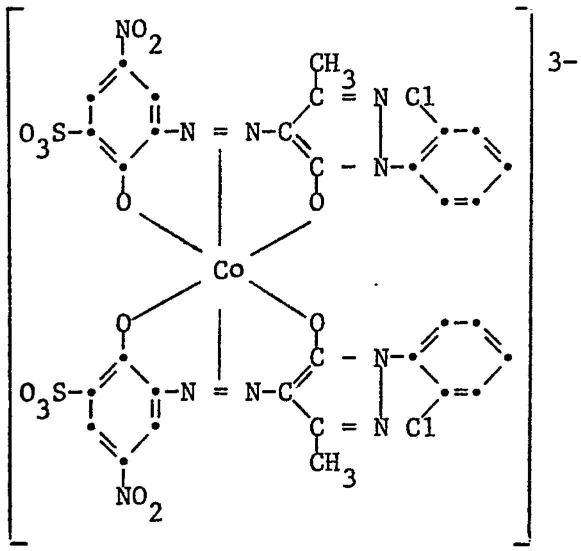

3 $Na^+$

Die entsprechenden Kaliumsalze erhält man, wenn man wie im Beispiel 2 beschrieben arbeitet.

Beispiele 8-16: Arbeitet man wie im Beispiel 7 beschrieben, verwendet jedoch die in der folgenden Tabelle aufgeführten Monoazofarbstoffe, so erhält man Gemische der symmetrischen und asymmetrischen Metallkomplexfarbstoffe, welche Leder in gelbbraunen Nuancen mit sehr guten Echtheiten färben.

| Beisp. | Azofarbstoff I | Azofarbstoff II |
|---|---|---|
| 8 | 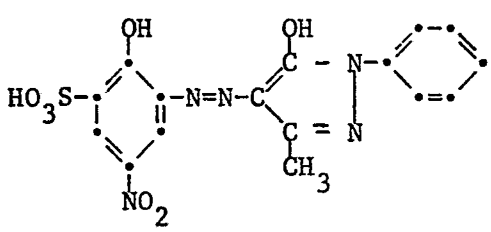 | 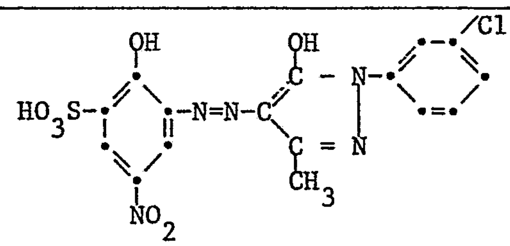 |
| 9 | do. | 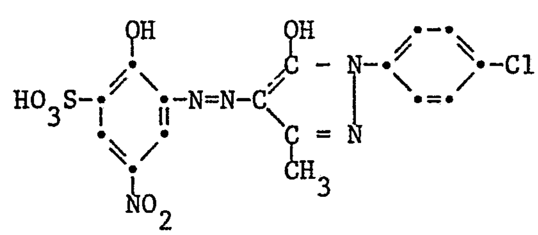 |

| Bsp. | Azofarbstoff I | Azofarbstoff II |
|---|---|---|
| 10 | 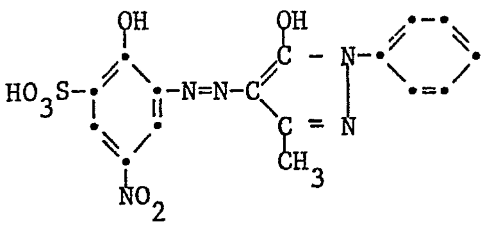 | 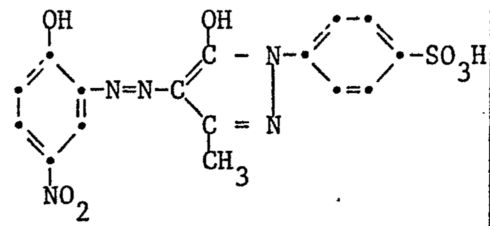 |
| 11 | do. | 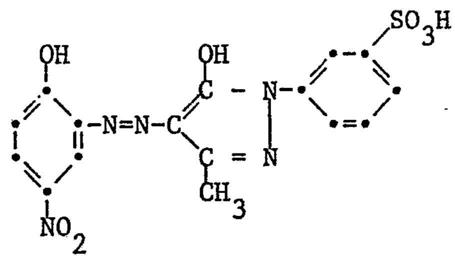 |
| 12 | do. | 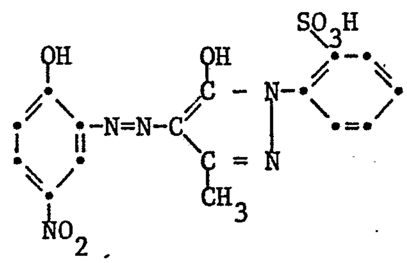 |
| 13 | do. | 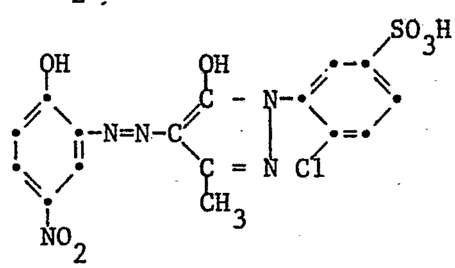 |
| 14 | do. | 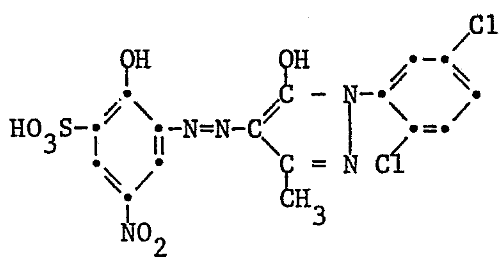 |

| Bsp. | Azofarbstoff I | Azofarbstoff II |
| --- | --- | --- |
| 15 | 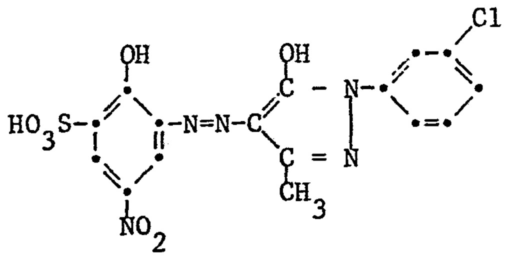 | 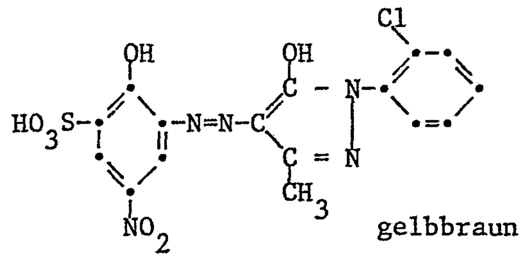 gelbbraun |
| 16 | do. | 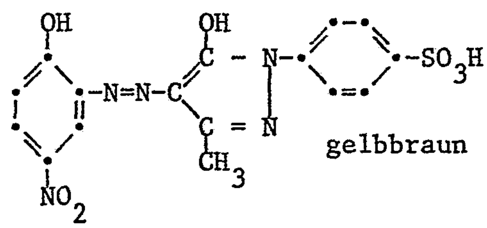 gelbbraun |

Färbevorschrift für Leder

100 Teile Bekleidungsvelourleder werden bei 50° in einer Lösung von 1000 Teilen Wasser und 2 Teilen 24%igem Ammoniak während 2 Stunden aufgewalkt und anschliessend bei 60° in einer Lösung von 1000 Teilen Wasser, 2 Teilen 24%igem Ammoniak und 3 Teilen des kobaltierten Farbstoffes gemäss Beispiel 1 während 1 Stunde gefärbt. Hierauf gibt man eine Lösung von 40 Teilen Wasser und 4 Teilen 85%iger Ameisensäure zu und färbt noch weitere 30 Minuten. Dann wird das Leder gut gespült und gegebenenfalls noch mit 2 Teilen eines Dicyandiaminoformaldehydkondensationsproduktes während 30 Minuten bei 50° behandelt. Man erhält eine gelbbraune Färbung mit guten Echtheiten.

Patentansprüche

1. Verwendung von Farbstoffen der Formel I

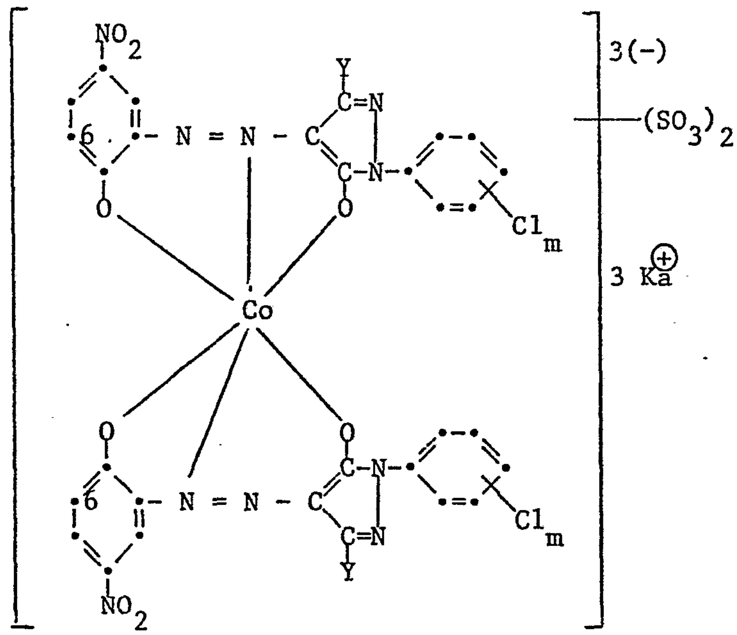

(I),

worin $Ka^{\oplus}$ ein Kation, m eine ganze Zahl von 0-2 und Y Methyl, $-CONH_2$ oder -CO-NH-R bedeuten, wobei R eine Alkylgruppe mit 1-4 C-Atomen darstellt und wobei mindestens eine Sulfogruppe in der Diazokomponente angeordnet ist, zum Färben von Leder oder Pelzen.

2. Verwendung gemäss Anspruch 1 von Farbstoffen der Formel I, worin mindestens eine Sulfogruppe in 6-Stellung der Diazokomponente angeordnet ist.

3. Verwendung gemäss Ansprüchen 1 oder 2 von Farbstoffen der Formel I, worin jeder Monoazofarbstoff eine Sulfogruppe trägt, wovon mindestens eine in der Diazokomponente angeordnet ist.

4. Verwendung gemäss Ansprüchen 1 bis 3 von Farbstoffen der Formel I, worin die beiden Sulfogruppen in 6-Stellung der beiden Diazokomponenten angeordnet sind.

5. Verwendung gemäss Ansprüchen 1 bis 4 von Farbstoffen der Formel I, worin m gleich 0 ist.

6. Verwendung gemäss Ansprüchen 1 bis 5 von Farbstoffen der Formel I, worin Y Methyl ist.

7. Verwendung gemäss Ansprüchen 1 bis 6 von Farbstoffen der Formel I, worin die beiden Sulfogruppen in 6-Stellung der beiden Diazokomponenten angeordnet sind, m gleich 0 und Y Methyl ist.

8. Verwendung von Farbstoffen der Formel I zum Färben von Leder.

0061997

Europäisches Patentamt

# EUROPÄISCHER RECHERCHENBERICHT

Nummer der Anmeldung

EP 82 81 0121

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-1 246 903 (CIBA) * Zusammenfassung A,1,3-6,B,C,7,8,D,E; Seite 1, rechte Spalte, 2. Hälfte; Seite 2, linke Spalte; Seite 2, rechte Spalte, letzter Absatz - Seite 3, linke Spalte, Zeile 5; Beispiele 1,2, und insbesondere Seite 4, Tabelle I, Farbstoffe 1,3,5 * | 1-8 | C 09 B 45/20<br>D 06 P 3/32<br>D 06 P 3/30 |
| A | DE-B-1 008 253 (BASF) * Ansprüche; Spalte 1, Zeilen 1-21; Spalte 2, Zeilen 35-52; Spalte 3, Beispiel 2; Spalten 5,6, Tabelle, Farbstoff 1 * | 1,8 | |
| A | US-A-3 468 618 (A. BUEHLER et al.) * Spalte 1, Zeilen 46-51; Spalte 2, Zeile 24 - Spalte 3, Zeile 3; Spalten 11,12, Tabelle B, Farbstoff 2 * | 1,8 | RECHERCHIERTE SACHGEBIETE (Int. Cl. 3) |
| A | EP-A-0 013 369 (BASF) * Seite 9, Beispiel 4 * | | C 09 B<br>D 06 P |

Der vorliegende Recherchenbericht wurde für alle Patentansprüche erstellt.

| Recherchenort | Abschlußdatum der Recherche | Prüfer |
|---|---|---|
| DEN HAAG | 15-07-1982 | DEKEIREL M.J. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82